# EUROPEAN PATENT SPECIFICATION

(11) **EP 2 844 383 B1**
(45) Date of publication and mention of the grant of the patent: **04.04.2018**
(21) Application number: 13720910.2
(22) Date of filing: 02.05.2013
(51) Int. Cl.: B01J 13/14, B27K 3/34, C04B 24/42, C04B 41/64

(54) **WATER REPELLENT ORGANOPOLYSILOXANE MATERIALS**
WASSERABWEISENDE ORGANOPOLYSILOXANSTOFFE
MATÉRIAUX D'ORGANOPOLYSILOXANE HYDROFUGES

(30) Priority: 02.05.2012 GB 201207662
(43) Date of publication of application: 11.03.2015
(73) Proprietor: Dow Corning Corporation, Midland, MI 48611 (US)
(72) Inventor: CAMPEOL, Frederick, 7134A Leval-Trahegnies (BE); DIMITROVA, Tatiana, 1420 Braine-l'Alleud (BE); GALEONE, Fabrizio, 7134B Epinois (BE); LECOMTE, Jean-Paul, 1160 Bruxelles (Auderghem) (BE); MARTEAUX, Leon, 1160 Bruxelles (Auderghem) (BE); SALVATI, Sabrina, 7012 Flenu (BE)
(74) Representative: Murgitroyd & Company
(86) International application number: PCT/EP2013/059081
(87) International publication number: WO 2013/164381

(56) References cited:
- WO-A1-2010/045440
- US-A1- 2010 152 332
- US-A1- 2012 101 227

## Description

This invention relates to water repellent materials used to treat porous substrates with a high tendency to absorb water in order to reduce water absorption. Examples of such porous substrates are cementitious substrates, clay-based bricks, gypsum-based substrates, lime-based substrates or wood-based substrates.

Organosilicon materials such as organopolysiloxanes or organosilanes have been used as water repellents for porous substrates. They have been used as coatings on the porous substrate or as additives incorporated into the porous substrate, for example incorporated into a cementitious composition before it is set.

EP 0811584 describes a granulated hydrophobing additive in cement. The granulated additive comprises an active organopolysiloxane component, a water-soluble or water dispersible binder and water-soluble, water-insoluble or water dispersible carrier particles. The additive is readily dispersible in cementitious materials upon the addition of water due to the non-hydrophobic nature of the binder and carrier of the granules.

WO 2008/062018 describes a process for preparing a granulated hydrophobing additive for cementitious material in which an organosilicon component and a binder polymer are applied to a particulate carrier from aqueous emulsion. The granulated hydrophobic additive thus prepared provides a high initial hydrophobicity to cementitious materials to which it is applied and the hydrophobicity can last during a long period of time.

US 6268423 describes building compositions containing hydrophobing powders comprising silica as support material and an organosilicon compound and optionally solvent and/or water and emulsifier.

US 2012/0101227 discloses aqueous suspensions of silicate shell microcapsules wherein a first portion of the silicate shell micro-capsules contain an organopolysiloxane having at least two alkenyl groups and a hydrosilylation catalyst as Part A of a curable siloxane composition, and a second portion of the silicate shell microcapsules contain an organohydrogensiloxane as Part B of the curable siloxane composition.

US 6251313 discloses the preparation of microcapsules having shell walls of organopolysiloxane and a core material, where the shell walls are produced in situ by hydrolysis and polycondensation of organosilanes and/or their condensates having not more than 4 silicon atoms.

US 2004/0256748 relates to a process for preparing silica microcapsules and more particularly, to a process for preparing silica microcapsules comprising the steps of dissolving tetraethyl orthosilicate (TEOS) into an aqueous solution containing a hydrolysis catalyst to control a degree of hydrolysis and contribute hydrophilicity or lipophilicity, adding a core material and an appropriate amount of aminopropyltrialkoxysilane(APS) as a gelling agent into the solution, and emulsifying and dispersing the resulting solution to a solution having a polarity opposite to that of the core material to microcapsulate by coating the core material with silica shell via a sol-gel reaction.

EP 0811584 discloses a cementitious material in powder form comprising cement, also comprising sufficient of a granulated hydrophobing additive, which comprises from 5 to 15 parts by weight of an organopolysiloxane component, from 10 to 40 parts by weight of a water-soluble or water-dispersible binder and from 50 to 80 parts by weight of a carrier particle, to give from 0.01 to 5% by weight of the organosiloxane component based on the weight of the cement.

Although the granulated hydrophobing additives described above have been successful in rendering cementitious materials hydrophobic, the presence of the hydrophobic organosilicon component at the surface of the formed cementitious material impacts detrimentally the paintability of the cementitious material, that is the adhesion of a post-applied coating or paint. The present is directed to a process for increasing the hydrophobicity of a porous product according to independent claim 1 and the use of microcapsules according to independent claim 9. Preferred embodiments are defined in the dependent claims.

An additive according to the present invention for increasing the hydrophobicity of a porous product comprises microcapsules comprising a water repellent organopolysiloxane core material and a shell of a silicon-based network polymer comprising silica units.

In an embodiment of the process according to the invention, a water-reactive silicon compound comprising a tetraalkoxysilane is added to an aqueous emulsion of a water repellent organopolysiloxane, whereby the water-reactive silicon compound condenses and polymerises at the interface of the droplets in the emulsion to form microcapsules.

The water repellent organopolysiloxane is a material based on a Si-O-Si polymer chain and may comprise mono-functional, di-functional, tri-functional and/or tetra-functional siloxane units. It is preferred that the majority of siloxane units are di-functional units having the general formula RR'SiO_{2/2} wherein R and R' each independently denotes an organic component or a hydroxyl or hydrogen substituent. Preferably R and R' are selected from alkyl groups, alkenyl groups, aryl groups, alkyl-aryl groups or aryl-alkyl groups. More preferably a substantial part, most preferably a majority of the R substituents will be alkyl groups having from 1 to 12 carbon atoms, most preferably methyl or ethyl groups.

The organopolysiloxane comprises for example polydimethylsiloxane (PDMS), alternatively, the organopolysiloxane is polydimethylsiloxane. The PDMS can for example be a hydroxyl-terminated PDMS or a trimethylsilyl-terminated PDMS. Alternatively the organopolysiloxane may comprise methylalkylsiloxane units in which the said alkyl group contains 2-20 carbon atoms, particularly those in which the said alkyl group contains 6-20 carbon atoms. One example of such a polymer is a dimethyl methyloctyl siloxane copolymer sold by Dow Corning under the product name 16-846. Blends of organopolysiloxanes can be used, for example a blend of a methylalkylsiloxane polymer with a linear PDMS.

Some of the R groups of the organopolysiloxane can be alkyl groups bearing an alkoxysilyl moiety, for example a trialkoxysilyl moiety. An example of such a polyorganosiloxane is the dimethyl methyloctyl methyl(triethoxysilyl)propyl siloxane copolymer sold by Dow Corning under the product name 16-606.

Although it is preferred that the majority of siloxane units are di-functional siloxane units other units such as tri-functional or tetra-functional units may also be present resulting in the polymer chain exhibiting a certain amount of branching. For example resinous organopolysiloxane materials may be used such as a condensation product of a partially hydrolysed trialkoxysilane. Blends of such resinous organopolysiloxane materials with a linear polyorganosiloxane such as PDMS can be used.

The total number of siloxane units is preferably such that the organopolysiloxane material has a viscosity in the range of from 1 to 120,000 mm²/s at 25°C. A trimethylsilyl-terminated PDMS for example may preferably have a viscosity in the range of from 100 to 80,000 mm²/s at 25°C. The organopolysiloxane can have a higher viscosity if desired; this can for example be achieved by carrying out polymerisation within the emulsion droplets.

In the process of the invention, a water-reactive silicon compound comprising a tetraalkoxysilane is added to an aqueous emulsion of a water repellent organopolysiloxane. The water repellent organopolysiloxane composition is emulsified in an aqueous medium preferably with the aid of a surfactant. The particle size (particle diameter) of the emulsion of water repellent organopolysiloxane is generally in the range 0.01 to 500, preferably 0,1 to 50 micrometres. The emulsion can alternatively be a microemulsion of particle size 10-150 nm.

The surfactant can be a cationic, non-ionic or amphoteric surfactant. Cationic and/or amphoteric surfactants, which readily form an emulsion of positive zeta-potential, may be preferred. We have found that a positive zeta-potential promotes condensation and polymerisation of the tetraalkoxysilane at the interface of the emulsified droplets of the water repellent organopolysiloxane, as described in EP 1471995. Nonionic surfactants can be used either alone or in conjunction with a cationic or amphoteric surfactant; for example the cationic or amphoteric surfactant can be mixed with up to an equal weight of nonionic surfactant.

Examples of cationic surfactants include quaternary ammonium hydroxides such as octyl trimethyl ammonium hydroxide, dodecyl trimethyl ammonium hydroxide, hexadecyl trimethyl ammonium hydroxide, octyl dimethyl benzyl ammonium hydroxide, decyl dimethyl benzyl ammonium hydroxide, didodecyl dimethyl ammonium hydroxide, dioctadecyl dimethyl ammonium hydroxide, tallow trimethyl ammonium hydroxide and coco trimethyl ammonium hydroxide as well as corresponding salts of these materials. Chloride salts may be preferred, for example hexadecyl trimethyl ammonium chloride. Further examples of suitable cationic surfactants include fatty amines and fatty acid amides and their derivatives, basic pyridinium compounds, quaternary ammonium bases of benzimidazolines and polypropanolpolyethanol amines.

Cationic surfactants containing an organosilicon group can be used. An example of such a surfactant is N-octadecyl-N,N-dimethyl-trimethoxysilylpropylammonium chloride of the formula

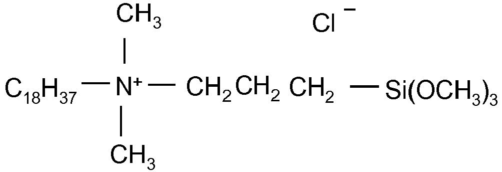

However such cationic alkoxysilanes may be more valuable when added after formation of the emulsion to act as a deposition aid, as described below.

Examples of suitable amphoteric surfactants include cocamidopropyl betaine, cocamidopropyl hydroxysulfate, cocobetaine, sodium cocoamidoacetate, cocodimethyl betaine, N-coco-3-aminobutyric acid and imidazolinium carboxyl compounds.

The above surfactants may be used individually or in combination.

Examples of non-ionic surfactants include polyoxyalkylene alkyl ethers such as polyethylene glycol long chain (12-14C) alkyl ether, polyoxyalkylene sorbitan ethers, polyoxyalkylene alkoxylate esters, polyoxyalkylene alkylphenol ethers, ethylene glycol propylene glycol copolymers, polyvinyl alcohol and alkylpolysaccharides, for example materials of the structure R¹-O-(R²O)ₘ-(G)ₙ wherein R¹ represents a linear or branched alkyl group, a linear or branched alkenyl group or an alkylphenyl group, R² represent an alkylene group, G represents a reduced sugar, m denotes 0 or a positive integer and n represent a positive integer as described in US Patent 5,035,832.

The concentration of surfactant in the aqueous emulsion of water repellent organopolysiloxane can be between 0.01 and 5% by weight, but is preferably below 2%, most preferably 0.02 to 1 by weight of the emulsion, particularly 0.05-0.5%.

The weight ratio of oil (organopolysiloxane) phase to aqueous phase in the emulsion can generally be between 40:1 and 1:50, although the higher proportions of aqueous phase are economically disadvantageous particularly when forming an emulsion of microcapsules. Usually the weight ratio of oil phase to aqueous phase is between 2:1 and 1:3. If the organopolysiloxane is highly viscous, a phase inversion process can be used in which the oil phase is mixed with surfactant and a small amount of water, for example 2.5 to 10% by weight based on the oil phase, forming a water-in-oil emulsion which inverts to an oil-in-water emulsion as it is sheared. Further water can then be added to dilute the emulsion to the required concentration.

The continuous phase of the emulsion can be a mixture of water with a water-miscible organic solvent such as an alcohol or lactam provided that the continuous phase is not miscible with the water repellent organopolysiloxane. The particle size of the emulsion of lipophilic active material can be reduced before addition of the water-reactive silicon compound, for example in an apparatus applying increased shear such as a homogeniser or microfluidiser, or a sonolator (ultrasonic mixer), producing an emulsion of microcapsules of particle size 200 nm to 10µm, most preferably between 2µm and 5µm.

The particle size of the microcapsules produced generally corresponds to the particle size of the starting emulsion and can for example be in the range 0.01-500 µm, most preferably 200 nm to 10 µm. If microcapsules of particle size 10-500 µm, particularly up to 50 or 100 µm are required, the aqueous phase of the emulsion preferably contains a thickener, for example polyvinylpyrrolidone, polyvinyl alcohol, bentonite clay, a cellulose derivative, particularly a cellulose ether such as sodium carboxymethylcellulose, a lightly crosslinked acrylic polymer, modified starch, an alginate or xanthan gum, to inhibit settling of the microcapsules from the emulsion during formation or subsequently. The thickener is added to the emulsion before addition of the tetraalkoxysilane.

The water reactive silicon compound comprises a tetraalkoxysilane, for example tetraethoxysilane (tetraethyl orthosilicate or TEOS). The tetraalkoxysilane such as TEOS can be used in monomeric form or as a liquid partial condensate. The tetraalkoxysilane can be used alone or in conjunction with one or more other water-reactive silicon compound having at least two, preferably at least three, Si-OH groups or hydrolysable groups bonded to silicon, for example an alkyltrialkoxysilane such as methyltrimethoxysilane or a liquid condensate of an alkyltrialkoxysilane. Hydrolysable groups can for example be alkoxy or acyloxy groups bonded to silicon. The water reactive silicon compound can for example comprise 75-100% by weight tetraalkoxysilane and 0-25% trialkoxysilane. The alkyl and alkoxy groups in the tetraalkoxysilanes or other silanes preferably contain 1 to 4 carbon atoms, most preferably 1 or 2 carbon atoms.

The tetraalkoxysilane, and other water-reactive silicon compound if used, hydrolyses and condenses to form a network polymer, that is a 3-dimensional network of silicon-based material, around the emulsified droplets of the water repellent organopolysiloxane. The water-reactive silicon compound preferably consists of at least 75%, and most preferably 90-100% tetraalkoxysilane. We have found that a tetraalkoxysilane is the most effective silicon compound for forming microcapsules, forming a 3-dimensional network consisting substantially of SiO_{4/2} units.

In one alternative process according to the invention, tri, di and monoalkoxysilanes are used in conjunction with the tetraalkoxysilane to provide organofunctions to the silica shell. The tri, di and monoalkoxysilanes react with the tetraalkoxysilane so that organofunctional units derived from the tri, di and monoalkoxysilane are incorporated into the network polymer which forms the shell of the microcapsules.

In one further alternative process according to the invention, a cationic alkoxysilane is used in conjunction with the tetraalkoxysilane. N-octadecyl-N,N-dimethyl-trimethoxysilylpropylammonium chloride is an example of such a cationic alkoxysilane. The cationic alkoxysilane improves the deposition of the microcapsules on a substrate from suspension, and is thus advantageous when a suspension of the microcapsules of water repellent organosilicon material is to be applied to the surface of a preformed porous product. The cationic alkoxysilane is added to the aqueous emulsion before or simultaneously with the tetraalkoxysilane. The cationic alkoxysilane reacts with the tetraalkoxysilane so that siloxane units derived from the cationic alkoxysilane are incorporated into the network polymer which forms the shell of the microcapsules.

The tetraalkoxysilane, and other water reactive silicon compound if used, can be added to the emulsion of water repellent organopolysiloxane as an undiluted liquid or as a solution in an organic solvent. The tetraalkoxysilane and the emulsion are generally mixed under shear during addition and subsequently during condensation to form the silicon-based polymer shell on the surface of the emulsified droplets. Mixing can for example be by stirring, but it is preferred that the emulsion and the tetraalkoxysilane are subjected to high shear, for example in a mixer of the rotor and stator type such as a Silverson (trade mark) mixer, either during addition of the tetraalkoxysilane or after addition of the tetraalkoxysilane and before formation of microcapsules is complete. High shear mixing immediately after addition of the tetraalkoxysilane is preferred. This leads to microcapsules of reduced particle size and appears to promote polymerisation of substantially all the tetraalkoxysilane at the interface of the emulsion droplets.

The condensation reaction of the water reactive silicon compound can be conducted at acidic, neutral or basic pH. The condensation reaction is generally carried out at ambient temperature and pressure, but can be carried out at increased temperature, for example up to 95°C, and increased or decreased pressure, for example under vacuum to strip the volatile alcohol produced during the condensation reaction. The weight ratio of water repellent organopolysiloxane to water reactive silicon compound is preferably at least 0.5:1 and in many cases may be at least 1.5:1, for example 2:1 to 20:1. Smaller microcapsules, for example those formed from a microemulsion, generally have a lower ratio of water repellent organopolysiloxane to water reactive silicon compound.

A catalyst for hydrolysis and/or condensation of the water reactive silicon compound to form the silicon-based network polymer may be used. The catalyst is preferably an oil soluble organic metal compound, for example an organic tin compound, particularly an organotin compound such as a diorganotin diester, for example dimethyl tin di(neodecanoate), dibutyl tin dilaurate or dibutyl tin diacetate, or alternatively a tin carboxylate such as stannous octoate, or an organic titanium compound such as tetrabutyl titanate. An organotin catalyst can for example be used at 0.05 to 2% by weight based on the water reactive silicon compound. An organotin catalyst has the advantage of effective catalysis at neutral pH. A catalyst is most preferably mixed with the water repellent organopolysiloxane before it is emulsified, since this promotes condensation of the water reactive silicon compound at the surface of the emulsified organopolysiloxane droplets. A catalyst can alternatively be added to the emulsion before the addition of the water-reactive silicon compound, or simultaneously with the water-reactive silicon compound, or after the addition of the water-reactive silicon compound to harden and make more impervious the shell of silicon-based polymer which has been formed. Encapsulation can however be achieved without catalyst. The catalyst, when used, can be added undiluted, or as a solution in an organic solvent such as a hydrocarbon, alcohol or ketone, or as a multiphasic system such as an emulsion or suspension.

The product of hydrolysis and condensation of the water reactive silicon compound is an aqueous suspension of microcapsules. The aqueous continuous phase can contain water miscible organic solvent; for example it usually contains an alcohol such as ethanol generated by hydrolysis of Si-bonded alkoxy groups. It may be advantageous to use the suspension of microcapsules as an additive to a porous product without separating the microcapsules from the suspension.

In other events, it may be advantageous to work with the microcapsules isolated from the aqueous media. Such recovery or isolation of the microcapsules from the suspension can be achieved by any known liquid removal technique, for example by spray drying, spray chilling, filtering, oven drying or lyophilisation.

The microcapsules can further be surface treated in suspension or in isolated (dry) form by the addition of tri, di or monoalkoxysilanes. Surface treatment of the microcapsules may modify compatibility, pH resistance, mechanical strength of said microcapsules.

Thus the hydrophobicity of a porous product can be increased by treating the product, or a composition providing for a porous product, with an aqueous suspension of microcapsules produced by the process of the invention as described above, optionally after dilution. This has particular advantage in post-treatment of an already formed porous product. In known processes post-treatment is generally carried out using an emulsion of a water repellent, but this leaves surfactant on the surface of the porous product. The clearest visible evidence of water repellency is 'beading', that is the formation of separated water droplets when a surface is wetted. Treatment with an emulsion does not achieve 'beading' at least initially. Treatment with the aqueous suspension of microcapsules according to the invention is a low surfactant delivery system and can achieve 'beading' immediately after application. The concentration of the water repellent organopolysiloxane in the suspension of microcapsules applied to the formed porous product is preferably in the range 0.5% to 10% by weight, more preferably 1 to 5%, of the suspension.

The microcapsules are used in the invention for treating cementitious substrates, clay-based substrates, gypsum-based substrates, lime-based substrates or wood-based substrates. The cementitious substrate can for example be a cement block, concrete, aerated cement or fibre reinforced cement. The clay-based substrate can for example be a brick, tile or pipe. The gypsum-based substrate can for example be plaster, gypsum panel, gypsum base. The lime-based substrate can for example be lime render. The wood-based substrate can for example be wood such as wood board or wood chips; or engineered wood such as laminated wood; plywood; OSB (Oriented Strand Board); particle board; fibre board such as insulation board, MDF (Medium Density Fiberboard) or the like. A suspension of the microcapsules of the invention has a much lower surfactant content than an emulsion of the same water repellent organosilicon material, resulting in a surface that is less wettable.

The microcapsules of the invention have the further advantage when treating porous construction materials, for example concrete or wood, that they also make the surface of the porous product oil repellent. The very low level of surfactant applied to the porous substrate by applying the microcapsules, compared to application of an emulsion, allows the water and oil repellent properties of the organopolysiloxane to be more effectively used.

Aside from post-treatment, the treatment may also be applied to compositions providing for a porous product such as cementitious compositions providing for a cementitious product or clay based compositions providing for a brick or tile product. A water repellent cementitious product can be produced by adding the microcapsules of the invention to a cementitious composition and shaping and hardening the composition to form the cementitious product. The cementitious composition can for example be concrete, aerated cement or fibre reinforced cement. The microcapsules can be added to the cementitious composition as an aqueous suspension of microcapsules produced as described above, or the microcapsules can be isolated from suspension before being added to the cementitious composition. The microcapsules are preferably added to the cementitious composition at a concentration of 0.05 to 2 % by weight water repellent organopolysiloxane based on the cementitious composition.

Similarly a water repellent brick or tile product can be produced by adding the microcapsules of the invention to a clay based composition and shaping and hardening the clay based composition to form the brick or tile product. The microcapsules can be added to the clay based composition as an aqueous suspension of microcapsules or as isolated microcapsules. The microcapsules are preferably added to the clay composition at a concentration of 0.05 to 2 % by weight water repellent organopolysiloxane based on the clay composition.

In these processes in which the water repellent is added to the composition before the composition is shaped and set, the microcapsules of the invention have the advantage that the water repellent is initially kept apart from the composition by the shell wall. In a cementitious composition, for example, the water repellent does not interfere with the hydrating reaction of the cement because the microcapsules survive for a time. However the high pH of the cementitious composition eventually dissolves the shell wall so that the water repellent organopolysiloxane is released throughout the composition to form a uniformly water repellent cementitious product.

One example of a cementitious product in which the microcapsules of the invention are particularly advantageous is an aerated cement product. The microcapsules can be added to a foamable cementitious composition. For example an aqueous suspension of microcapsules or isolated microcapsules can be added to the foamable cementitious composition. Hydrophobic materials effective as water repellents are generally also foam suppressants. Using the microcapsules of the invention, the water repellent is kept apart from the foamable composition by the shell wall of the microcapsules for a long enough time for foaming of the composition to take place.

The invention is illustrated by the following Examples, in which parts and percentages are by weight.

Figures 1 and 2 relate to evaluation of efficiency in hydrophobing wood substrates.
- Fig. 1A is a schematic view of the vacuum assembly (105) where the wood blocks (101) are placed for 20 minutes, at 40 mbar, in the glass container, under the metallic wire (102). Connect (103) is connected to the water repellent solution (104), but closed (double headed arrow).
- Fig. 1B is a schematic view of the addition of water repellent composition (104) to the assembly at atmospheric pressure via inlet (103).
- Fig. 1C is a schematic view of the impregnation for 20 minutes at atmospheric pressure.
- Fig. 2 is a schematic view of the absorption assembly where the wood blocks (201) as treated above are placed upright (on their smallest section - 27 x 18 mm) on 2 pieces of glass (202), ensuring only 2 mm of the wood block is in contact with water (204) in container (203).

### EXAMPLES

### Example 1 and Comparative example C1

33.3% water repellent PDMS of viscosity 9 000 mm²/s at 25°C was emulsified in 66.4% water containing 0.3% hexadecyl trimethyl ammonium chloride cationic surfactant using a high shear rotor stator mixer. N-octadecyl-N,N-dimethyl-trimethoxysilylpropylammonium chloride was added to the emulsion produced. 10% TEOS was added to the emulsion while stirring. Microcapsules of median diameter 3µm were produced in suspension. The microcapsules comprised a core of PDMS and a shell of a network polymer of TEOS comprising silica units and cationic siloxane units derived from the N-octadecyl-N,N-dimethyl-trimethoxysilylpropylammonium chloride.

The suspension of microcapsules was diluted with water so that it contained 5% PDMS. The diluted suspension was sprayed onto the surface of preformed concrete blocks of size 4 x 4 x 16 cm. Two samples were treated; the amount of diluted suspension applied is shown in Table 1.

The speed of development of the hydrophobic properties was assessed by placing a drop of water on the surface of the treated blocks at measured times after application of the water repellent. After 10 minutes, the droplet was wiped off and the residual mark on the concrete blocks was rated according to the following scale.
- Rating of 1: no wetting of the surface, after 10 min. The water droplets does not leave any traces
- Rating of 2 : maximum 50% of the contact area is wetted (became darker)
- Rating of 3 : 100% of the contact area is wetted (darker)
- Rating of 4 : small diffusion ring around the water droplet, maximum 10% of droplet is absorbed
- Rating of 5 : pronounced diffusion ring around water droplet, maximum 50% of droplet is absorbed
- Rating of 6 : droplet is completely absorbed
The ratings are shown in Table 1. A lower number rating indicates a more effective hydrophobing treatment.

In Comparative example C1, the lower particle size emulsion produced in the first stage of Example 1 was diluted to a concentration of 5% PDMS. This diluted emulsion was tested in the same way as the microcapsule suspension of Example 1.

### Examples 2 and 3

The suspension of microcapsules produced in Example 1 was diluted with water so that it contained 3% PDMS (Example 2) or 1% PDMS (Example 3). The diluted suspension was sprayed onto the surface of preformed concrete blocks and tested as described in Example 1. The amounts applied and the test results are shown in Table 1.

**Table 1**

| Example | Concentration of PDMS | Application rate (g) | Test results after 30 minutes | Test results after 5 hours |
|---|---|---|---|---|
| No treatment | | | 6 ; 6 | 6 ; 6 |
| Example 1 | 5% | 0.28 ; 0.24 | 1 ; 1 | 1 ; 1 |
| Comparative example C1 | 5% | 0.22 ; 0.26 | 5 ; 5 | 6 ; 5 |
| Example 2 | 3% | 0.39 ; 0.33 | 1 ; 2 | 1 ; 2 |
| Example 3 | 1% | 0.38 ; 0.30 | 2 ; 3 | 2 ; 3 |

It can be seen from Table 1 that the suspension of microcapsules used in Example 1 impart much better hydrophobic properties than the emulsion from which the microcapsules are produced Comparative example 1. Even when the suspension of microcapsules is diluted further in Examples 2 and 3 it imparts better hydrophobic properties than the emulsion of Comparative example C1. The results obtained 30 minutes after application show the extremely quick development of hydrophobic properties achieved by the suspension of microcapsules of the present invention.

The suspension of Example 1 and the emulsion of Comparative example C1 were tested again using a higher rate of application. In this test, the "drop entry time" was recorded in addition to the test rating 10 minutes after placing of the water drop. Drop entry time is the time required to have a 50µl water droplet completely absorbed by the treated substrates. The results are shown in Table 2.

**Table 2**

| | No treatment | Example 1 | Comparative example C1 |
|---|---|---|---|
| Application rate | | 2.19g | 2.17g |
| Test result after 45 mins | 6 | 1 | 5 |
| Drop entry time after 45 mins | 15 mins | 2 hour 15 mins | 30 mins |
| Test result after 3 hours | 6 | 1 | 5 |
| Drop entry time after 3 hours | 15 mins | 2 hour 45 mins | 50 mins |
| Test result after 24 hours | 6 | 1 | 5 |
| Drop entry time after 24 hours | 6 mins | 3 hours | 70 mins |

The drop entry times confirm the superior hydrophobic properties of the concrete blocks treated with the suspension of microcapsules of the invention.

### Example 4 and Comparative example C2

Example 4 : 25% water repellent silanol terminated PDMS of viscosity 50 000 mm2/s at 25°C was emulsified in 66.2% water containing 0.11% hexadecyl trimethyl ammonium chloride cationic surfactant using a high shear rotor stator mixer. 3.2% N-octadecyl-N,N-dimethyl-trimethoxysilylpropylammonium chloride was added to the emulsion produced. 4.8% TEOS was added to the emulsion while stirring. Microcapsules of median diameter 3 µm were produced in suspension. The microcapsules comprised a core of silanol terminated PDMS and a shell of a network polymer of TEOS comprising silica units and cationic siloxane units derived from the N-octadecyl-N,N-dimethyl-trimethoxysilylpropylammonium chloride.

Comparative example C2 is a non-ionic emulsion of 60 000 mm²/s trimethyl-terminated PDMS.

Example 4 and Comparative example C2 were tested for efficiency in hydrophobing wood substrates following a method of wood treatment via impregnation, and subsequent water absorption of said treated wood, versus untreated wood.

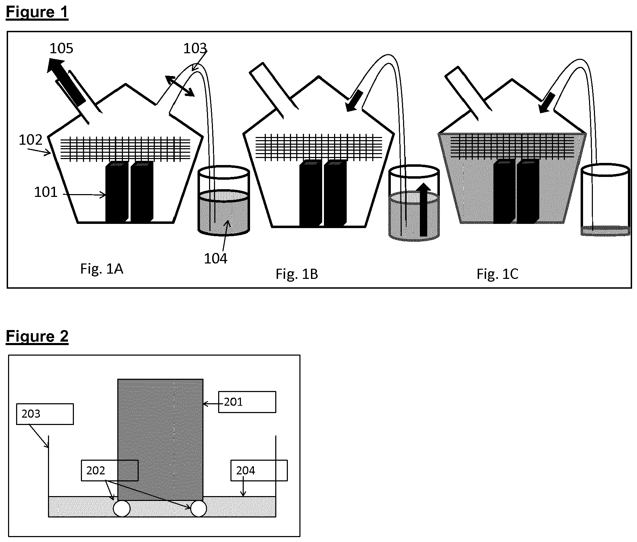

Impregnation conditions:
- Wood: blocks of white pine of size: 50 x 27 x 18 mm.
- The blocks of pine are dried in an oven at 40°C, until a constant weight is recorded (intervals of 24 hours).
- The blocks are placed under vacuum for 20 minutes, at 40 mbar (Fig. 1A). The water repellent composition is allowed to enter within the flask, submerging the wood blocks (Fig. 1B).
- The blocks are immersed in the water repellent composition (1% active material) for 20 minutes, at atmospheric pressure (Fig. 1C).
- The blocks are then removed and tapped dried with paper, their weight is recorded.
- The blocks are then dried for 4 days in an oven at 40°C.

The impregnation level is measured by weight difference before impregnation and after impregnation + drying steps.

Effectiveness of the water repellent composition:
- The blocks as treated above are placed upright (on their smallest section - 27 x 18 mm) on 2 pieces of glass, ensuring only 2 mm of the wood block is in contact with water (Fig. 2).
- Capillary forces will drive water absorption.
- The blocks are then removed, tapped dried with paper, weighed and placed again on the glass rods. Weight is then recorded after 1, 3, 6, 8 and 24 hours contact with water

Weight absorption is calculated as a percentage based on the weight before absorption and the weight after absorption of water.

**Table 3**

| | Water uptake (% of dry wood samples weight) as a function of time in hours | | | | | |
|---|---|---|---|---|---|---|
| | | | (hours) | | | |
| | 0 h | 1 h | 3 h | 6 h | 8 h | 24 h |
| Comparative example C2 | 0 | 8,4 | 13,1 | 18,1 | 20,6 | 33,8 |
| Example 4 | 0 | 2,8 | 5,0 | 7,3 | 8,4 | 13,9 |
| No treatment | 0 | 18,5 | 25,2 | 32,1 | 35,4 | 51,3 |

## Claims

1. A process for increasing the hydrophobicity of a porous product by treating the product or a composition providing the product, with a water repellent material, wherein the porous product or a composition providing the product is treated with an aqueous suspension of microcapsules, where the microcapsules comprise a water repellent organopolysiloxane core material and a shell of a silicon-based network polymer comprising silica units **characterised in that** the porous product is a porous construction material, selected from the group consisting of cementitious substrates, clay-based substrates, gypsum-based substrates, lime-based substrates or wood-based substrates.

2. A process according to Claim 1, wherein the water repellent organopolysiloxane core material comprises polydimethylsiloxane.

3. A process according to any preceding Claim, wherein the microcapsules are obtainable by the addition of a water-reactive silicon compound comprising a tetraalkoxysilane to an aqueous emulsion of a water repellent organopolysiloxane, whereby the water-reactive silicon compound condenses and polymerises at the interface of the droplets in the emulsion to form said microcapsules.

4. A process according to Claim 3, wherein the water-reactive silicon compound is tetraethoxysilane.

5. A process according to any of Claim 3 or 4 wherein a quaternised aminoalkylalkoxysilane is added to the aqueous emulsion before or simultaneously with the water reactive silicon compound.

6. A process according to claim 1 wherein microcapsules comprising a water repellent organopolysiloxane core material and a shell of a silicon-based network polymer comprising silica units are added to a cementitious composition and the composition is shaped and hardened to form a cementitious product.

7. A process according to Claim 6 for making a water repellent aerated cement product, wherein the microcapsules are added to a foamable cementitious composition.

8. A process according to claim 1 wherein microcapsules comprising a water repellent organopolysiloxane core material and a shell of a silicon-based network polymer comprising silica units are added to a clay based composition and the composition is shaped and hardened to form a brick or tile product.

9. Use of microcapsules comprising a water repellent organopolysiloxane core material and a shell of a silicon-based network polymer comprising silica units as a water repellent for a porous product **characterised in that** the porous product is a porous construction material, selected from the group consisting of cementitious substrates, clay-based substrates, gypsum-based substrates, lime-based substrates or wood-based substrates.

## Patentansprüche

1. Ein Verfahren zum Erhöhen der Hydrophobizität eines porösen Produkts durch das Behandeln des Produkts oder einer das Produkt bereitstellenden Zusammensetzung mit einem wasserabweisenden Material, wobei das poröse Produkt oder eine das Produkt bereitstellende Zusammensetzung mit einer wässrigen Suspension von Mikrokapseln behandelt wird, wobei die Mikrokapseln ein wasserabweisendes Kernmaterial aus Organopolysiloxan und eine Ummantelung aus einem auf Silicium basierenden Netzwerkpolymer, beinhaltend Siliciumdioxideinheiten, beinhalten **dadurch gekennzeichnet, dass**
das poröse Produkt ein poröses Baumaterial ist, ausgewählt aus der Gruppe, bestehend aus zementartigen Substraten, auf Ton basierenden Substraten, auf Gips basierenden Substraten, auf Kalk basierenden Substraten oder auf Holz basierenden Substraten.

2. Verfahren gemäß Anspruch 1, wobei das wasserabweisende Kernmaterial aus Organopolysiloxan Polydimethylsiloxan beinhaltet.

3. Verfahren gemäß einem der vorhergehenden Ansprüche, wobei die Mikrokapseln durch die Zugabe einer mit Wasser reagierenden Siliciumverbindung, die ein Tetraalkoxysilan beinhaltet, zu einer wässrigen Emulsion eines wasserabweisenden Organopolysiloxans erhalten werden können, wodurch die mit Wasser reagierende Siliciumverbindung an der Grenzfläche der Tröpfchen in der Emulsion kondensiert und polymerisiert, um die Mikrokapseln zu bilden.

4. Verfahren gemäß Anspruch 3, wobei die mit Wasser reagierende Siliciumverbindung Tetraethoxysilan ist.

5. Verfahren gemäß einem der Ansprüche 3 oder 4, wobei ein quaternisiertes Aminoalkylalkoxysilan vor oder simultan mit der mit Wasser reagierenden Siliciumverbindung zu der wässrigen Emulsion hinzugegeben wird.

6. Verfahren gemäß Anspruch 1, wobei Mikrokapseln, die ein wasserabweisendes Kernmaterial aus Organopolysiloxan und eine Ummantelung aus einem auf Silicium basierenden Netzwerkpolymer, beinhaltend Siliciumdioxideinheiten, beinhalten, zu einer zementartigen Zusammensetzung hinzugegeben werden und die Zusammensetzung geformt und gehärtet wird, um ein zementartiges Produkt zu bilden.

7. Verfahren gemäß Anspruch 6 zum Herstellen eines wasserabweisenden mit Luft durchsetzten Zementprodukts, wobei die Mikrokapseln zu einer schäumbaren zementartigen Zusammensetzung hinzugegeben werden.

8. Verfahren gemäß Anspruch 1, wobei Mikrokapseln, die ein wasserabweisendes Kernmaterial aus Organopolysiloxan und eine Ummantelung aus einem auf Silicium basierenden Netzwerkpolymer, beinhaltend Siliciumdioxideinheiten, beinhalten, zu einer auf Ton basierenden Zusammensetzung hinzugegeben werden und die Zusammensetzung geformt und gehärtet wird, um ein Ziegel- oder Fliesenprodukt zu bilden.

9. Eine Verwendung von Mikrokapseln, die ein wasserabweisendes Kernmaterial aus Organopolysiloxan und eine Ummantelung aus einem auf Silicium basierenden Netzwerkpolymer, beinhaltend Siliciumdioxideinheiten, beinhalten, als ein wasserabweisendes Material für ein poröses Produkt
**dadurch gekennzeichnet, dass**
das poröse Produkt ein poröses Baumaterial ist, ausgewählt aus der Gruppe, bestehend aus zementartigen Substraten, auf Ton basierenden Substraten, auf Gips basierenden Substraten, auf Kalk basierenden Substraten oder auf Holz basierenden Substraten.

## Revendications

1. Un procédé pour augmenter l'hydrophobicité d'un produit poreux en traitant le produit ou une composition fournissant le produit, avec un matériau hydrofuge, dans lequel le produit poreux ou une composition fournissant le produit sont traités avec une suspension aqueuse de microcapsules, où les microcapsules comprennent un matériau de noyau organopolysiloxane hydrofuge et une enveloppe d'un polymère à liaisons transversales à base de silicium comprenant des unités de silice
**caractérisé en ce que**
le produit poreux est un matériau de construction poreux, sélectionné dans le groupe constitué de substrats cimentaires, de substrats à base d'argile, de substrats à base de gypse, de substrats à base de chaux ou de substrats à base de bois.

2. Un procédé selon la revendication 1, dans lequel le matériau de noyau organopolysiloxane hydrofuge comprend du polydiméthylsiloxane.

3. Un procédé selon n'importe quelle revendication précédente, dans lequel les microcapsules peuvent être obtenues par l'ajout d'un composé de silicium réagissant avec l'eau comprenant un tétraalcoxysilane à une émulsion aqueuse d'un organopolysiloxane hydrofuge, grâce à quoi le composé de silicium réagissant avec l'eau se condense et se polymérise au niveau de l'interface des gouttelettes dans l'émulsion pour former lesdites microcapsules.

4. Un procédé selon la revendication 3, dans lequel le composé de silicium réagissant avec l'eau est le tétraéthoxysilane.

5. Un procédé selon n'importe lesquelles des revendications 3 ou 4 dans lequel un aminoalkylalcoxysilane quaternisé est ajouté à l'émulsion aqueuse avant ou en même temps que le composé de silicium réagissant avec l'eau.

6. Un procédé selon la revendication 1 dans lequel des microcapsules comprenant un matériau de noyau organopolysiloxane hydrofuge et une enveloppe d'un polymère à liaisons transversales à base de silicium comprenant des unités de silice sont ajoutées à une composition cimentaire et la composition est conformée et durcie pour former un produit cimentaire.

7. Un procédé selon la revendication 6 pour la réalisation d'un produit en ciment aéré hydrofuge, dans lequel les microcapsules sont ajoutées à une composition cimentaire moussable.

8. Un procédé selon la revendication 1 dans lequel des microcapsules comprenant un matériau de noyau organopolysiloxane hydrofuge et une enveloppe d'un polymère à liaisons transversales à base de silicium comprenant des unités de silice sont ajoutées à une composition à base d'argile et la composition est conformée et durcie pour former un produit en dalles ou en briques.

9. Utilisation de microcapsules comprenant un matériau de noyau organopolysiloxane hydrofuge et une enveloppe d'un polymère à liaisons transversales à base de silicium comprenant des unités de silice en tant qu'hydrofuge pour un produit poreux
**caractérisée en ce que**
le produit poreux est un matériau de construction poreux, sélectionné dans le groupe constitué de substrats cimentaires, de substrats à base d'argile, de substrats à base de gypse, de substrats à base de chaux ou de substrats à base de bois.
